# EUROPEAN PATENT APPLICATION

(11) **EP 1 878 602 A1**
(43) Date of publication of application: **16.01.2008**
(21) Application number: 06253721.2
(22) Date of filing: 15.07.2006
(51) Int. Cl.: B60K 11/04, B60H 1/00, B60H 1/32, F25B 9/00, F28D 1/04

(54) **Cooling module for a vehicle**

(71) Applicant: Delphi Technologies, Inc., Troy, Michigan 48007 (US)
(72) Inventor: Achaichia, Nacer, 1429 (LU)
(74) Representative: Waller, Stephen

(57) **Abstract**

A cooling module 1 for a vehicle having a CO2 type HVAC system, the cooling module comprising an air-cooled coolant radiator 2 to cool.a coolant flow from the power unit of the vehicle, an air-cooled gas cooler 4 to cool a refrigerant flow of the CO2 type HVAC system of the vehicle, the coolant radiator 2 and the gas cooler 4 being mounted on or in a common module housing adjacent one another whereby a cooling air flow can pass through the coolant radiator and gas cooler in series, wherein an internal heat exchanger 30 and an accumulator 60 of the HVAC system are mounted between the coolant radiator 2 and the gas cooler 4, said internal heat exchanger 30 being connected to the gas cooler 4 and the accumulator 60 to provide heat exchange between refrigerant exiting the gas cooler 4 and refrigerant exiting the accumulator 60.

## Description

The present invention relates to a cooling module for a vehicle, the cooling module including an air-cooled coolant radiator for cooling a coolant from the power unit of the vehicle and an air-cooled gas cooler for cooling a carbon dioxide (CO2) refrigerant flow from the compressor of a CO2 type heating, ventilating and air conditioning (HVAC) system of the vehicle.

US 6,155,335 discloses a known cooling module for a vehicle wherein air-cooled heat exchangers for both the engine cooling system and the HVAC system are sandwiched together into an integrated cooling module with a pair of electrically powered fans mounted therebetween. Such document also envisages that the residual volume surrounding the fan rings can be utilised to mount fluid containers, such as a coolant radiator overflow reservoir and/or reservoirs for other liquids such as windscreen washer fluid or power steering fluid. This known system is for use with R134a refrigerant and locates only the condenser of the HVAC system in the cooling module, thus requiring separate assembly and connection of the remaining refrigeration components of the HVAC system during vehicle assembly on the production line.

Due largely to environmental concerns, there has recently been a shift to using CO2 refrigerant in vehicle HVAC systems in place of R134a refrigerant. CO2 refrigerant is being considered as a replacement refrigerant for use by the automotive industry for air conditioning, as well as in other applications, mainly due to the low global warming potential of such refrigerant. However, CO2 based systems have many challenges resulting from the fact that such systems operates in transcritical mode leading to high pressures and high compressor out temperatures. Thus CO2 type HVAC systems are particularly prone to refrigerant leakage problems and, due to the high pressures involved, any such leakage can have potentially dangerous results. As such, assembly and leak testing of the refrigerant circuit of CO2 type vehicle HVAC systems can be a costly and time consuming process. It is also difficult to ensure a leak free refrigerant system during assembly of the vehicle.

Other challenges posed by CO2 type HVAC systems are the low critical temperature and the shape of the isotherms around the critical point. The performance of the gas cooler is therefore limited by the ambient air temperature.

In order to improve the performance of such CO2 systems it is important to have additional cooling at the exit from the gas cooler. This is normally achieved through the use of an internal heat exchanger, where low pressure cold refrigerant at exit from the evaporator is used to further cool down the high pressure refrigerant leaving the gas cooler. However, this requires even more refrigerant circuit connections, further increasing the possibility of leakage and further complicating assembly.

According to the present invention there is provided a cooling module for a vehicle having a CO2 type HVAC system, the cooling module comprising an air-cooled coolant radiator to cool a coolant flow from the power unit of the vehicle, the radiator including a plurality of coolant passages to direct the coolant flow through the radiator and spaces between the coolant passages to direct a cooling air flow through the radiator, an air-cooled gas cooler to cool a refrigerant flow of the CO2 type HVAC system of the vehicle, the gas cooler including a plurality of refrigerant passages to direct the CO2 refrigerant through the gas cooler and spaces between the refrigerant passages to direct a cooling air flow through the gas cooler, the coolant radiator and the gas cooler being mounted on or in a common module housing adjacent one another whereby a cooling air flow can pass through the coolant radiator and the gas cooler in series, wherein an internal heat exchanger and an accumulator of the HVAC system are mounted between the coolant radiator and the gas cooler, said internal heat exchanger being connected to the gas cooler and the accumulator to provide heat exchange between refrigerant exiting the gas cooler and refrigerant exiting the accumulator.

Preferably the accumulator and/or the internal heat exchanger is/are connected directly to the gas cooler to permit the passage of refrigerant therebetween without any intervening hoses or pipes.

Alternatively the connection between the gas cooler and the internal heat exchanger and/or the accumulator and the internal heat exchanger is provided by rigid interconnecting means comprising one or more refrigerant flow lines or interconnecting blocks or units having flow passages provided therein.

By mounting the accumulator and internal heat exchanger within the cooling module, between the coolant radiator and gas cooler, the refrigerant circuit connections between the accumulator and the internal heat exchanger and between the gas cooler and the internal heat exchanger can be pre-assembled during assembly of the cooling module, therefore the number of refrigerant circuit connections required to be made during assembly of the vehicle on the production line is greatly reduced.

Furthermore, the close proximity of the internal heat exchanger to the accumulator and gas cooler reduces the length of the required refrigerant connections and the inclusion of such components in a single pre-assembled module enables the use of rigid connections and/or direct connection between such components, further reducing the possibility of leaks or failure of such interconnections.

Moreover, the pre-assembled cooling module enables the gas cooler, internal heat exchanger and accumulator and the refrigerant connections therebetween to be leak tested before delivery to the production line for assembly in the vehicle.

The present invention will now be described, by way of example, with reference to the accompanying drawings, in which:

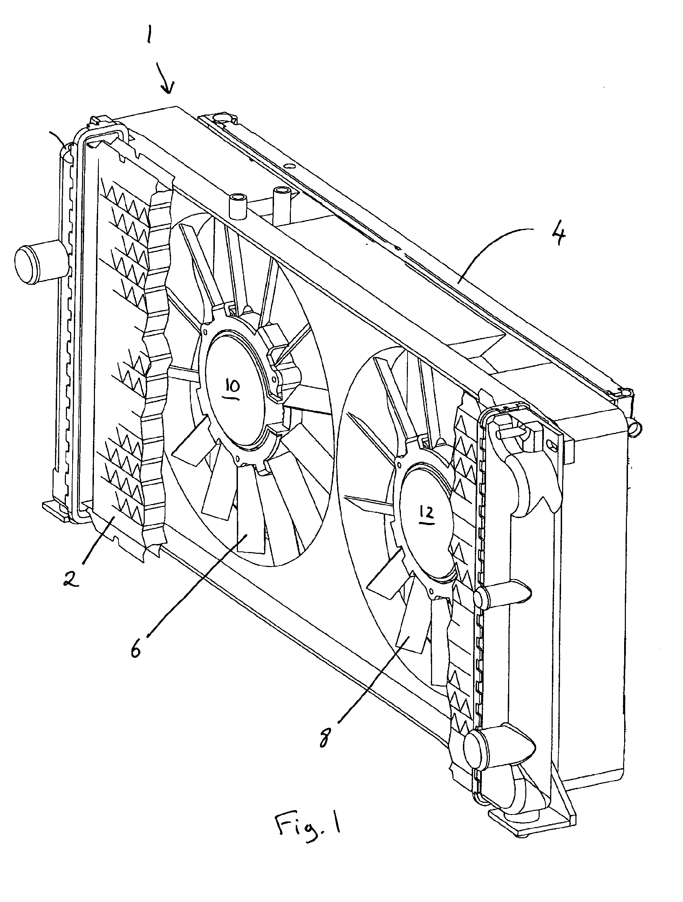

Fig. 1 is a perspective view of a cooling module according to an embodiment of the present invention;
Fig. 2 is a schematic view of the cooling module of cooling module of Fig. 1.

A shown in the drawings, a cooling module 1 according to a preferred embodiment of the present invention comprises an air-cooled coolant radiator 2 for cooling a coolant from the power unit of the vehicle and a gas cooler 4 for cooling CO2 refrigerant from the HVAC system of the vehicle. Sandwiched between the coolant radiator 2 and the gas cooler 4 are a pair of fans 6,8 for forcibly passing cooling air through the coolant radiator and gas cooler, each fan 6,8 being powered by an electric motor 10,12.

As is conventional in CO2 type HVAC systems, the HVAC refrigeration circuit includes a compressor 20, normally driven by the vehicle power unit for compressing refrigerant before passing the refrigerant into the gas cooler 4, wherein the refrigerant is cooled by heat exchange with a flow of cooling air passing through the gas cooler 4. The cooled refrigerant is then passed from the gas cooler 4 into an internal heat exchanger 30 wherein the refrigerant is further cooled by heat exchange with refrigerant from the low pressure side of the refrigeration circuit, as will be described below. The refrigerant is then passed from the internal heat exchanger 30 through an orifice tube 40 or other expansion device, wherein the pressure of the refrigerant is lowered before the refrigerant is passed into an evaporator 50, wherein heat is exchanged with a flow of air passing into the passenger compartment 55 of the vehicle to cool said air. The refrigerant subsequently passes into an accumulator 60 before passing through the internal heat exchanger 30 for heat exchange with the high pressure refrigerant as discussed above, before returning to the compressor 20.

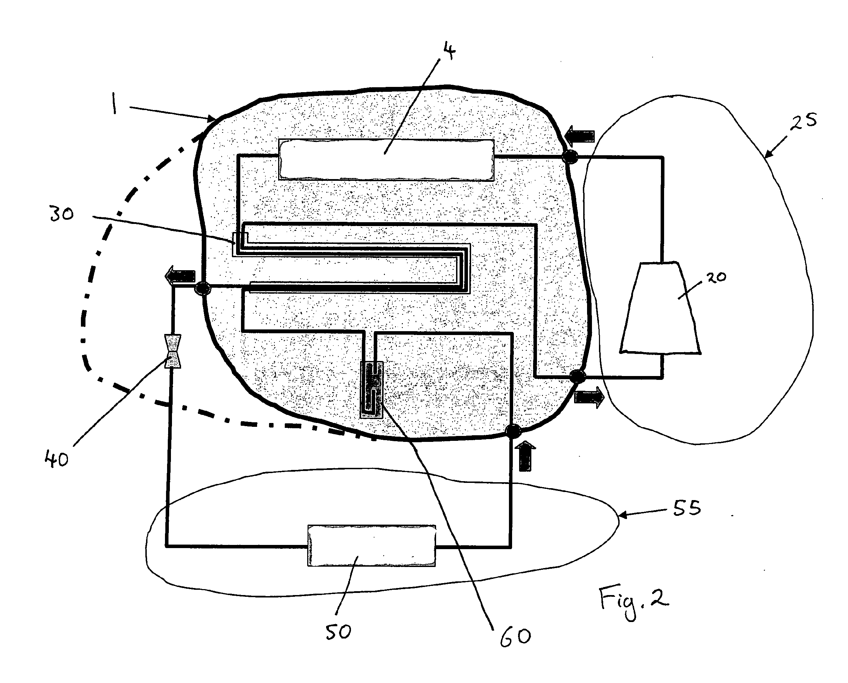

The gas cooler 4, the accumulator 60, the internal heat exchanger 30 and, optionally, the orifice tube 40 (as indicated by the broken line in Fig. 2) are provided within the cooling module 1 in the residual space surrounding the fans 6,8. Thus the gas cooler 4, internal heat exchanger 30, the accumulator 60 (and optionally the orifice tube 40) and the fluid connections therebetween can all be pre-assembled within the cooling module 1. Only the compressor 20, normally mounted within the engine compartment 25, and the evaporator 50, normally mounted within the passenger compartment 55, require separate connection to the cooling module 1, thus facilitating assembly on the production line and reducing the risk of leaks, either during assembly or in service.

The close proximity between such components and their integration into a single module enables the interconnections between the components and assembly of the HVAC system within the vehicle to be greatly simplified.

Indeed, it is possible to directly connect such components to one another without requiring any intervening pipes or other connection means, if desired, therefore greatly reducing the possibility of leaks, either upon assembly or in service. If intervening connection means are required, due to the integration of such components into a single module, such intervening connection means can comprise rigid pipes or connecting blocks with internal fluid passageways, and rigid and thus more reliable interconnections can be made between such components and their associated connection means.

Furthermore, such integrated components of the cooling module and their interconnections can be leak tested during manufacture of the cooling module, obviating the need for subsequent leak testing of such components after assembly of the vehicle.

The integration of the accumulator, internal heat exchanger and, optionally, the orifice tube into the residual space around the fans within the cooling module provides a more compact arrangement because such components are located in space that would otherwise be wasted.

## Claims

1. A cooling module for a vehicle having a CO2 type HVAC system, the cooling module comprising an air-cooled coolant radiator to cool a coolant flow from the power unit of the vehicle, the radiator including a plurality of coolant passages to direct the coolant flow through the radiator and spaces between the coolant passages to direct a cooling air flow through the radiator, an air-cooled gas cooler to cool a refrigerant flow of the CO2 type HVAC system of the vehicle, the gas cooler including a plurality of refrigerant passages to direct the CO2 refrigerant through the gas cooler and spaces between the refrigerant passages to direct a cooling air flow through the gas cooler, the coolant radiator and the gas cooler being mounted on or in a common module housing adjacent one another whereby a cooling air flow can pass through the coolant radiator and gas cooler in series, wherein an internal heat exchanger and an accumulator of the HVAC system are mounted between the coolant radiator and the gas cooler, said internal heat exchanger being connected to the gas cooler and the accumulator to provide heat exchange between refrigerant exiting the gas cooler and refrigerant exiting the accumulator.

2. A cooling module as claimed in claim 1, wherein the accumulator and/or the internal heat exchanger is/are connected directly to the gas cooler to permit the passage of refrigerant therebetween without any intervening hoses or pipes.

3. A cooling module as claimed in claim 1, wherein the connections between the gas cooler and the internal heat exchanger and the accumulator and the internal heat exchanger are provided by rigid interconnecting means comprising one or more refrigerant flow lines or interconnecting blocks or units having flow passages provided therein.

4. A cooling module as claimed in any preceding claim, wherein the module further comprises at least one fan mounted between the coolant radiator and the gas cooler for moving air through the coolant radiator and gas cooler, the internal heat exchanger and accumulator being mounted in the residual space around the at least one fan and between the coolant radiator and the gas cooler.

5. A cooling module as claimed in any preceding claim further comprising an orifice tube or expansion valve of the HVAC system, said orifice tube being provided between the coolant radiator and the gas cooler and being connected to an outlet of the internal heat exchanger for receiving refrigerant from the gas cooler, downstream of the gas cooler.

6. A cooling module as claimed in claim 5, wherein the orifice tube is connected directly to the internal heat exchanger for passing refrigerant therebetween.

7. A cooling module as claimed in claim 5, wherein the orifice tube is provided with an intervening rigid interconnection means for passing refrigerant between the internal heat exchanger and the orifice tube.

8. A cooling module as claimed in any preceding claim, wherein the module is provided with a first refrigerant inlet connection for connection to an outlet from a compressor of the HVAC system, a second refrigerant inlet connection for connection to an outlet from an evaporator of the HVAC system, a first refrigerant outlet connection for connection to an inlet of the evaporator and a second refrigerant outlet connection for connection to an inlet of the compressor.

9. A cooling module as claimed in claim 8, wherein the first inlet connection communicates with an inlet of the gas cooler, the second inlet connection communicates with an inlet of the accumulator, the first outlet connection communicates with an outlet of the internal heat exchanger, downstream of the gas cooler and the second outlet connection communicates with an outlet of the internal heat exchanger downstream of the accumulator.
